# EUROPÄISCHE PATENTSCHRIFT

(11) **EP 0 967 703 B1**
(45) Veröffentlichungstag und Bekanntmachung des Hinweises auf die Patenterteilung: **17.08.2005**
(21) Anmeldenummer: 99111478.6
(22) Anmeldetag: 12.06.1999
(51) Int. Cl.: H02G 3/32, H02G 1/00

(54) **Anordnung von Befestigungselementen für die Halterung von mit Kabelbändern umspannten Bündeln**
Arrangement of fastening elements for holding bundles serrated with cable straps
Agencement d'éléments de fixation pour faisceaux de câbles serrés par bandes

(30) Priorität: 24.06.1998 DE 19828007
(43) Veröffentlichungstag der Anmeldung: 29.12.1999
(73) Patentinhaber: A. Raymond & Cie, F-38028 Grenoble-Cédex (FR)
(72) Erfinder: Lesser, Hans-Jürgen, 79618 Rheinfelden (DE); Büsch, Martin, D- 79588 Efringen-Kirchen (DE); Jäckle, Hartmut, 79725 Laufenburg-Luttingen (DE)
(74) Vertreter: Rüttgers, Joachim, Dr.

(56) Entgegenhaltungen:
- EP-A- 0 303 723
- US-A- 4 640 320
- US-A- 5 119 528

## Beschreibung

Die Erfindung bezieht sich auf eine Anordnung von Befestigungselementen für die Halterung von mit Kabelbändern umspannten Bündeln sowie auf ein Verfahren zur Aneinanderreihung von Befestigungselementen, wobei die Kabelbänder vorzugsweise zum Verspannen von Kabelbündel, Rohren und dgl. langgestreckter Gegenstände dienen. Hierbei können die Verriegelungsschlösser der Kabelbänder sowohl mit deren Bandanfang einstückig verbunden oder aber als separates Teil ausgebildet sein, welche - wie bei dem Bindegerät nach **EPS 0 565 968** - mit den Enden eines von einer Rolle zugeführten, endlosen Kabelbandes verbunden werden.

Nach dem Umfassen des Kabelbündels sowie Einführen und Festzurren des Kabelbandes im Verriegelungsschloß soll zur Halterung des Bündels ein separates Befestigungselement aus Kunststoff verwendet werden, welches beispielsweise aus **DE 94 01 448 U1** bekannt ist. Dieses Befestigungselement besitzt eine Haltelasche zum formschlüssigen Durchführen des Kabelbandes und wird nach dem Einfädeln und Festzurren des Kabelbandes mit seiner Befestigungsplatte an einem entsprechend geformten Trägerteil verankert. Hierbei wird es als Nachteil empfunden, daß das Einführen des Kabelbandes in die Haltelasche und das Positionieren des Bandes in der Lasche mittels eines Stiftes von Hand erfolgt, was nicht nur sehr zeitaufwendig und daher kostspielig ist, sondern auch Fingerfertigkeit erfordert.

Bei Verwendung von Bindegeräten zur Verarbeitung von endlosen Kabelbändern mit automatischer Bereitstellung von Verriegelungsschlössern ist es zudem schwierig, das Kabelband vor oder nach dem Umfassen des Kabelbündels durch die Haltelasche des Befestigungselementes zu führen. Auch benötigt man hierbei zur lagebestimmten Positionierung der Befestigungselemente und die Zuführung vor die Bandaustrittsöffnung des Bindegerätes sogenannte Schwingförderer mit geeigneten Zufuhrkanälen, was mit zusätzlichen Kosten verbunden ist.

Aufgabe der Erfindung ist es daher, die Befestigungselemente so zu gestalten und miteinander zu verbinden, daß eine lagebestimmte Bereitstellung der Befestigungselemente und Verarbeitung im Bindegerät mit wirtschaftlich vertretbarem Aufwand möglich ist.

Diese Aufgabe wird nach der vorliegenden Erfindung im wesentlichen durch die im Anspruch 1 angegebene Ausbildung der Befestigungselemente und deren abreißbare Verbindung mit den Angußstreifen gelöst, welche bei der automatischen Verarbeitung als Transportstreifen dienen. Hierdurch können die Befestigungselemente dem Bindegerät als Gruppe in einer zur Weiterverarbeitung günstigen Lage zugeführt und nach dem Abtrennen von den Angußstreifen in die zum Durchführen des Kabelbandes jeweils geeignete Position gebracht werden.

Um für die automatische Verarbeitung der Befestigungselemente im Bindegerät bessere Voraussetzungen zu schaffen, sind in den Unteransprüchen weitere Mittel angegeben, die entweder für den Transport der Angußstreifen hilfreich sind oder aber dafür sorgen, daß mehrere Gruppen von aneinandergereihten Befestigungselementen beim Verspritzen in der Gießform zu einer beliebig langen Kette verbindbar sind und dadurch anschließend aufgerollt werden können, so daß ein größerer Vorrat an Befestigungselementen vorhanden ist.

Aus **DE 41 05 460 C2** ist zwar bereits ein Verfahren zur Aneinanderreihung von Kabelbindern zu einem sogenannten Bandcluster zur Verwendung in einem Bindegerät beschrieben, bei welchem die einzelnen Bänder endseitig durch Verspritzen verbunden werden. Doch werden hierbei die in Längsrichtung hintereinander angeordneten Bündelungsbänder an deren Enden durch Verschmelzen im Formwerkzeug miteinander verbunden, um dann anschließend im Bindegerät nach dem Einsatz jeweils vom nachfolgenden Band wieder getrennt zu werden.

Demgegenüber dienen die an ihren Enden miteinander verschmolzenen Bänder ausschließlich als Transporthilfe bei der Zuführung und automatischer Bereitstellung von aneinandergereihten Befestigungselementen und kommen selbst beim Binden der Kabelbündel nicht zum Einsatz.

In der Zeichnung sind zwei Ausführungsbeispiele der Erfindung dargestellt, die nachfolgend näher erläutert werden. Es zeigt
- Fig. 1: Mehrere, mittels Verbindungsstege und Angußstreifen untereinander verbundene Befestigungselemente mit Rundlochfuß in Draufsicht,
- Fig. 2: die gleiche Reihe Befestigungselemente in Seitenansicht,
- Fig. 3: ein einzelnes Befestigungselement in Seitenansicht mit Teilschnitt durch die Haltelasche und den Kragen,
- Fig. 4: die miteinander verbundenen, stufenförmig abgesetzten Enden von zwei aufeinanderfolgenden Angußstreifen,
- Fig. 5: ein schematisch dargestelltes Bindegerät für Kabelbänder mit Bandführungsbügel und automatischer Bereitstellung von aneinandergereihten Befestigungselementen,
- Fig. 6: Zahnradantrieb für Zahnstangenprofil der Angußstreifen
- Fig. 7: der vergrößerte Kopf des Bindegerätes mit geöffnetem Bandführungsbügel,
- Fig. 8: der gleiche Kopf mit geschlossenem Bandführungsbügel und eingelegtem Kabelbündel sowie neben dem Verriegelungsschloß ein bereitgestelltes Befestigungselement,
- Fig. 9: ein geschlossenes Kabelband mit in der Bandschlaufe eingesetztem Befestigungselement in Seitenansicht,
- Fig. 10: das gleiche Kabelband mit Befestigungselement in Vorderansicht,
- Fig. 11: eine andere Ausführungsform der Erfindung mit Befestigungselementen für Gewindebolzenaufnahme, welche nur mittels Angußstreifen zusammenhängen, in Draufsicht,
- Fig. 12: die gleiche zusammenhängende Reihe von Befestigungselementen in Seitenansicht,
- Fig. 13: einen Schnitt durch den Angußstreifen und die Angußstege gemäß Linie IIX - IIX in Figur 11 und
- Fig. 14: das geschlossene Kabelband mit in der Bandschlaufe eingesetztem Befestigungselement in Seitenansicht wie bei Figur 9.

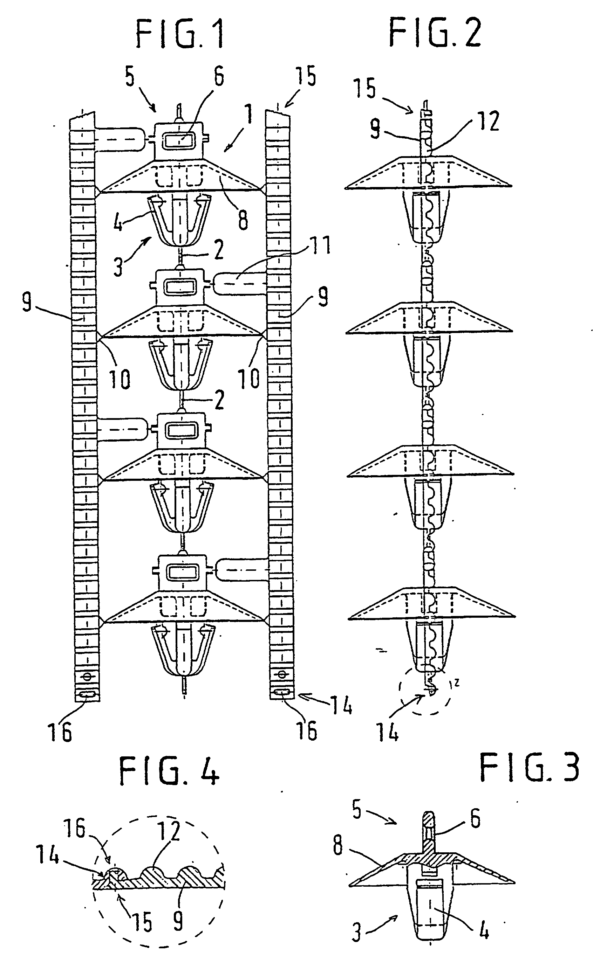

In den **Figuren** 1 und 2 sind mehrere Befestigungselemente **1** aus Kunststoff dargestellt, die in einer Reihe hintereinander angeordnet und durch abreißbare Verbindungsstege **2** miteinander verbunden sind. Jedes Befestigungselement **1** besteht hierbei aus einem Befestigungsfuß **3**, welcher mit spreizbaren Federbeinen **4** zur Verankerung im Loch einer Trägerplatte versehen ist, sowie aus einem Kopf **5**, der mit einer im Querschnitt rechteckigen Haltelasche **6** zum formschlüssigen Durchführen eines Kabelbandes **7** versehen ist. Zwischen Kopf **5** und Fuß **3** befindet sich ein umlaufender Kragen **8**, der zur federnden Auflage des Befestigungselementes **1** auf einer nicht dargestellten Trägerplatte dient.

Beiderseits der Kragen **8** verlaufen die zum Spritzgießen erforderlichen Angußstreifen **9**, wobei das Gießmaterial durch Angußstege **10** in die Kragen **8** geführt wird. Außerdem sind noch Angußstege **11** zwischen den Angußstreifen **9** und den Köpfen **5** der Befestigungselemente **1** vorgesehen, um ein schnelleres Auffüllen der Gießform im Bereich der Haltelasche **6** zu gewährleisten.

Die beiderseits der Kragen **8** vorbeigeführten Angußstreifen **9** bieten den großen Vorteil, daß diese nach dem Öffnen der Gießformhälften über die Angußstege **10** mit den Kragen verbunden bleiben, und zwar derart, daß diese Angußstreifen **9** bei der anschließenden Bereitstellung der Befestigungselemente **1** als Transportstreifen verwendet werden können.

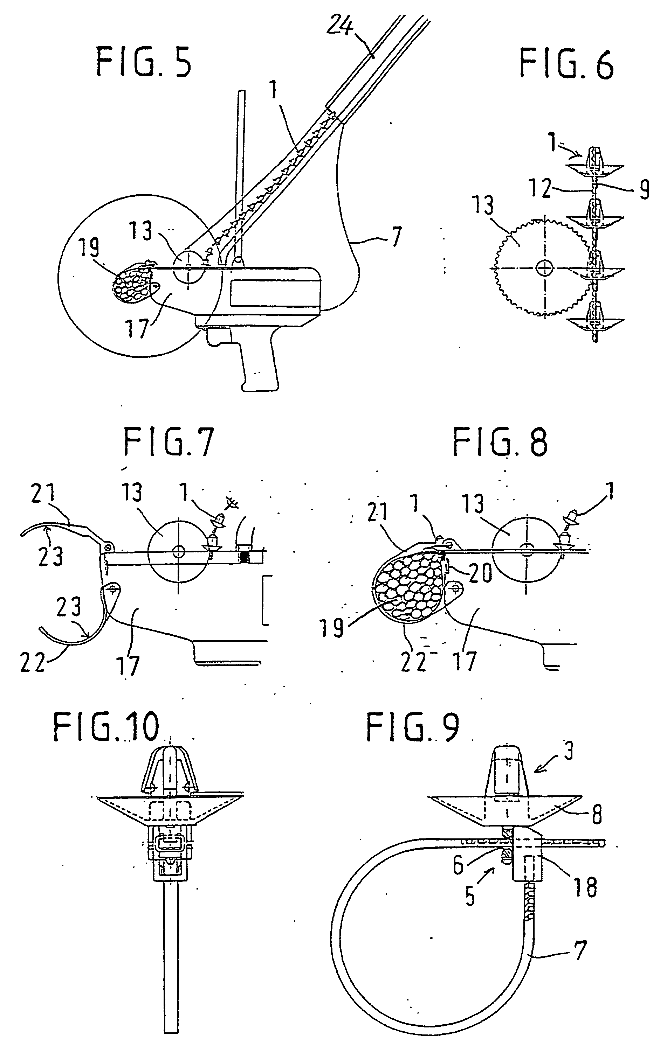

Zu diesem Zweck sind die Angußstreifen **9** jeweils auf einer Seite mit einem Zahnstangenprofil **12** versehen, welches von einem entsprechend ausgebildeten Zahnrad **13** in einem in den **Figuren** 5 bis 8 dargestellten Bindegerät angetrieben werden kann. Außerdem sind die Angußstreifen **9**, wie aus **Figur 4** ersichtlich, an beiden Enden stufenförmig abgesetzt, wobei sich die Stufe **14** an dem einen Ende des Angußstreifens **9** mit der entsprechenden Gegenstufe **15** am Anfang des nachfolgenden Streifens **9** zu einem vollen Streifenquerschnitt ergänzen. Um die Angußstreifen **9** einer fertigverspritzten Befestigungsgruppe mit dem Angußstreifen **9** der nachfolgenden Befestigungsgruppe untereinander verbinden zu können, sind die Angußstreifen **9** jeweils an ihrem Ende im Bereich der Stufe **14** mit einem Langloch **16** versehen, welches bei der erfindungsgemäßen Herstellung der Befestigungsgruppen zur Aufnahme von Spritzgut der nachfolgenden Angußstreifen **9** dient.

Nach dem Öffnen der Gießform werden die fertigverspritzten Befestigungselemente **1** zusammen mit ihren Angußstreifen **9** aus der Gießform gehoben. Sodann werden die Angußstreifen **9** mit ihren gelochten Enden in einen entsprechend geformten Bereich der Gießform so eingelegt, daß beim Verspritzen der nachfolgenden Befestigungsgruppe das Spritzgut für die Angußstreifen **9** in die Langlöcher **16** der in der Form verbliebenen Enden der vorherigen Angußstreifen **9** eindringt und diese so ausfüllt, daß die beiden Enden unverlierbar verbunden bleiben. Auf diese Weise ist es möglich, beliebig viele Befestigungsgruppen in einer Gießform nacheinander zusammenhängend zu verspritzen und für die weitere Bereitstellung im Bindegerät auf eine Rolle aufzuwickeln.

Das in den **Figuren** 5, 7 und 8 schematisch dargestellte Bindegerät entspricht in seinem Grundaufbau gängigen Bindegeräten mit kontinuierlicher Zufuhr von Kabelbändern **7** unbestimmter Länge, welche im Kopf **17** des Gerätes durch ein bereitgestelltes Verriegelungsschloß **18** hindurchgeführt, um das Kabelbündel **19** herumgeführt und dann wieder in das Schloß **18** eingeführt werden und danach verspannt und hinter dem Schloß **18** mittels eines angedeuteten Messers **20** abgetrennt werden.

Zur selbsttätigen Umführung des Kabelbandes **7** sind am Kopf **17** zwei etwa halbrund geformte Führungsbügel **21** und **22** schwenkbar gelagert. Diese befinden sich zunächst in der in **Figur** 7 gezeigten Öffnungsstellung. Nach der Aufnahme des zu haltenden Kabelbündels **19** werden die Bügel **21** und **22** zusammengeschwenkt und bieten dann dem herangeführten Kabelband **7** an der Innenseite eine Führungsrille **23**, durch welche das Kabelband **7** sicher in die Öffnung des Verriegelungsschlosses **18** geführt und dort in bekannter Weise verrastet wird. Über dem Bindegerät ist ferner ein Führungskanal **24** für die über Verbindungsstege **10** mit den Angußstreifen **9** zusammengehaltenen Befestigungselemente **1** angeordnet. Ferner ist am unteren Ende des Kanals **24** ein Zahnrad **13** drehbar gelagert, welches in das Zahnstangenprofil **12** der Angußstreifen **9** eingreift und dafür sorgt, daß jeweils ein Befestigungselement **1** mit der Haltelasche **6** vorweg heruntergezogen wird (vgl. **Figur** 7).

Zum Einführen des Kabelbandes **7** in die Haltelasche **6** des Befestigungskopfes **5** muß das Befestigungselement **1** mittels einer nicht dargestellten Verschiebeeinrichtung bis vor die Austrittsöffnung des Kopfes **17** vorgeschoben und mit der Haltelasche **6** vor dem seitlich zugeführten Verriegelungsschloß **18** bereitgestellt werden. Sodann kann das Kabelband **7** durch das Verriegelungsschloß **18** und die Haltelasche **6** hindurchgeschoben, über die Führungsrille **23** der beiden Bügel **21** und **22** wieder in das Verriegelungsschloß **18** zurückgeführt und dort in bekannter Weise verrastet werden (vgl. **Figuren** 9 und 10).

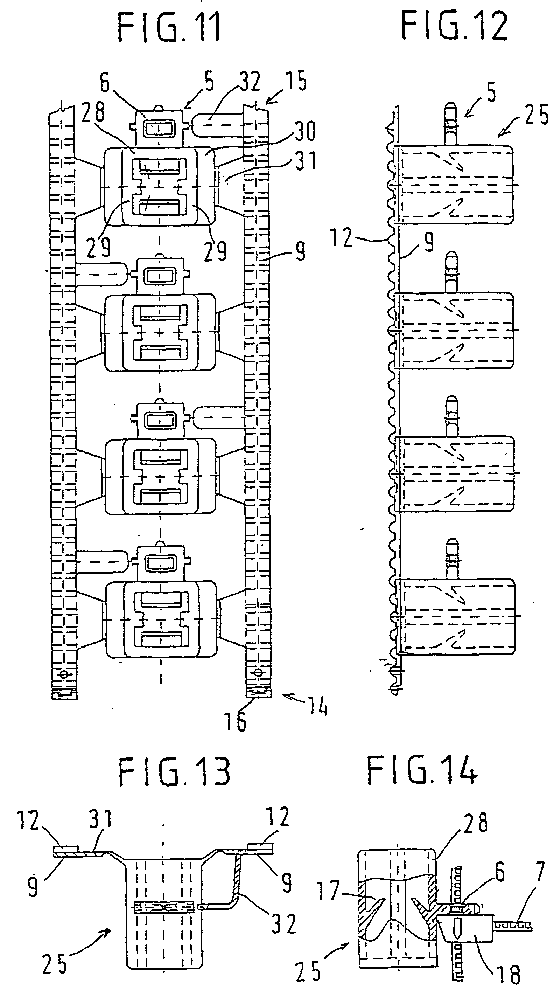

In den **Figuren** 11 bis 13 ist eine andere Ausführungsform der Erfindung dargestellt, bei der die Befestigungselemente **25** für Gewindebolzenaufnahme ausgebildet sind und nur über die Angußstreifen **9** zusammenhängen. Das Befestigungselement **25** besteht hierbei aus einer im Querschnitt rechteckigen Befestigungshülse **26** mit an der Innenwand angeformten, schräg zur Mitte gerichteten Stützfingern **27** zum Einrasten in die Rillen eines nicht dargestellten Gewindebolzens sowie an einer Außenwand **28** angeformter Haltelasche **6** zum Durchführen des Kabelbandes **7**.

An den hierzu um 90° versetzten Außenwänden **29** sind seitlich schräg abstehende Stützlappen **30** angeformt, welche zur federnden Auflage des Befestigungselementes **25** auf dem Trägerteil dienen. Diese Stützlappen **30** sind an ihrer freien Kante über abreißbare Angußlappen **31** mit den Angußstreifen **9** verbunden, welche in gleicher Weise wie bei den **Figuren** 1, 2 und 4 mit einem Zahnstangenprofil **12** versehen sind. Außerdem sind - genau wie bei dem Ausführungbeispiel nach **Fig.** 1 und 2 - noch zusätzliche Angußstege **32** zwischen den Angußstreifen **9** und den Köpfen **5** der Befestigungselemente **25** vorgesehen, um ein schnelleres Auffüllen der Gießform im Bereich der Haltelasche **6** zu gewährleisten.

Die Beschreibung der vorgenannten Ausführungsformen ist nur beispielhaft zu verstehen und nicht auf die Bereitstellung von Befestigungselementen mit Haltelaschen zur Durchführung von Kabelbändern bei der Halterung von Kabelbündel beschränkt. Die Erfindung ist vielmehr für alle Befestigungselemente anwendbar, die unter Verwendung von Angußstreifen als Transporthilfe zur lagebestimmten Positionierung bei irgendwelchen automatisch gesteuerten Montageabläufen bereitgestellt werden sollen.

## Patentansprüche

1. Anordnung von Befestigungselementen für die Halterung von mit Kabelbändern umspannten Bündeln zur Verwendung in einem Bindegerät, bestehend aus einem Befestigungsfuß ( 3 ) zur Verankerung auf einem Trägerteil sowie einem Befestigungskopf ( 5 ) mit einer Haltelasche ( 6 ) zum formschlüssigen Durchführen des Kabelbandes ( 7 ), wobei zwischen Kopf ( 5 ) und Fuß ( 3 ) ein umlaufender Kragen ( 8 ) zur Auflage auf dem Trägerteil angeformt ist, **dadurch gekennzeichnet, daß** die Befestigungselemente ( 1 ) in einer Reihe hintereinander angeordnet und durch längs der Kragen ( 8 ) verlaufende Angußstreifen ( 9 ) miteinander verbunden sind.

2. Anordnung von Befestigungselementen nach Anspruch 1, **dadurch gekennzeichnet, daß** der Befestigungsfuß ( 3 ) jedes Befestigungselementes ( 1 ) über einen abreißbaren Steg ( 2 ) mit der Haltelasche ( 6 ) des nachfolgenden Befestigungskopfes ( 5 ) verbunden ist.

3. Anordnung von Befestigungselementen nach Anspruch 1 oder 2, **dadurch gekennzeichnet, daß** die Angußstreifen ( 9 ) auf jeweils einer Seite mit einem Zahnstangenprofil ( 12 ) versehen sind.

4. Anordnung von Befestigungselementen nach einem der Ansprüche 1 bis 3, **dadurch gekennzeichnet, daß** die Angußstreifen ( 9 ) an beiden Enden stufenförmig abgesetzt sind, und zwar derart, daß die Stufen ( 14 ) an einem Ende jeweils mit den entsprechenden Gegenstufen ( 15 ) am nachfolgenden Anfang sich zu einem vollen Streifenquerschnitt ergänzen und untereinander verbindbar sind.

5. Verfahren zur Aneinanderreihung von Befestigungselementen für deren automatische Bereitstellung bei der Halterung von Bündeln nach einem der Ansprüche 1 bis 4, **dadurch gekennzeichnet, daß** die Befestigungselemente in der Gießform beiderseits der Kragen ( 8 ) über zwei zueinander parallele Angußstreifen ( 9 ) verspritzt werden und die Befestigungselemente ( 1 ) nach dem Öffnen der Gießformhälften mittels abreißbarer Angußstege ( 11 ) mit diesen verbunden bleiben, und zwar derart, daß die Angußstreifen ( 9 ) bei der anschließenden Bereitstellung der Befestigungselemente als Transportstreifen verwendbar sind.

6. Verfahren nach Anspruch 5, **dadurch gekennzeichnet, daß** die Angußstreifen ( 9 ) nach dem Ausstoßen aus der Gießform mit den Endstufen ( 14 ) in die Gießform zurückgelegt werden und beim Verspritzen der nachfolgenden Gruppe von Befestigungselementen ( 1 ) mit den Anfangsstufen ( 15 ) der nachfolgenden Angußstreifen ( 9 ) unverlierbar verspritzt werden.

7. Verfahren nach Anspruch 6, **dadurch gekennzeichnet, daß** die am Ende jeweils angespritzten Stufen ( 14 ) Aussparungen bzw. Langlöcher ( 16 ) aufweisen, die vom Spritzgut der nachfolgenden Stufen ( 15 ) ausgefüllt werden.

## Claims

1. Arrangement of fastening elements for holding bundles encompassed by cable straps for use in a tying device, consisting of a fastening foot (3) for anchoring on a support part and a fastening head (5) having a retaining tab (6) for passage of the cable strap (7) with interlocking, an all-round collar (8) for support on the support part being moulded on between head (5) and foot (3), **characterized in that** the fastening elements (1) are arranged in series one behind the other and are connected to one another by sprue strips (9) running along the collar (8).

2. Arrangement of fastening elements according to Claim 1, **characterized in that** the fastening foot (3) of each fastening element (1) is connected via a tear-off web (2) to the retaining tab (6) of the following fastening head (5).

3. Arrangement of fastening elements according to Claim 1 or 2, **characterized in that** the sprue strips (9) are provided on one side in each case with a rack profile (12).

4. Arrangement of fastening elements according to any of Claims 1 to 3, **characterized in that** the sprue strips (9) are offset in a step-like manner at both ends, in particular in such a way that the steps (14) at one end combine in each case with the corresponding counter-steps (15) at the subsequent beginning to form a full strip cross-section and can be connected to one another.

5. Method for arranging fastening elements one behind the other in series for automatic provision in the holding of bundles according to any of Claims 1 to 4, **characterized in that** the fastening elements are injected into the mould on both sides of the collars (8) via two sprue strips (9) parallel to one another and, after opening of the mould halves, the fastening elements (1) remain connected thereto by means of tear-off sprue webs (11), in particular in such a way that the sprue strips (9) can be used as transport strips in the subsequent provision of the fastening elements.

6. Method according to Claim 5, **characterized in that**, after ejection from the mould, the end steps (14) of the sprue strips are placed back in the mould and are injection moulded in a captive manner with the initial steps (15) of the subsequent sprue strips (9) during injection moulding of the subsequent group of fastening elements (1).

7. Method according to Claim 6, **characterized in that** the steps (14) moulded on in each case at the end have recesses or slots (16) which are filled by the moulding material of the subsequent steps (15).

## Revendications

1. Agencement séquentiel d'organes de fixation pour le maintien en position de faisceaux de câbles enserrés par des lanières attache-câbles, destiné à être utilisé dans un appareil de ligaturage, se composant d'une pattes de fixation (3) pour son ancrage dans un élément formant support ainsi que d'une tête de fixation (5) munie d'une attache de retenue (6) pour l'introduction, par l'action mécanique résultant de sa forme, de la lanière attache-câbles (7), une collerette périphérique (8), destinée à prendre appui sur l'élément formant support, étant en l'occurrence réalisée solidaire par moulage de la portion comprise entre la tête (5) et la patte(3), **caractérisé en ce que** les organes de fixation (1) sont placés selon une disposition séquentielle les uns à la suite des autres et sont reliés ensemble par des carottes en forme de bandelettes (9) s'étendant le long des collerettes (8).

2. Agencement séquentiel d'organes de fixation selon la revendication 1, **caractérisé en ce que** la patte de fixation (3) de chaque organe de fixation (1) est relié par une barrette entretoise à rupture par arrachement (2) à l'attache de retenue (6) de la tête de fixation (5) suivante.

3. Agencement séquentiel d'organes de fixation selon la revendication 1 ou 2, **caractérisé en ce que** les carottes en forme de bandelettes (9) présentent respectivement sur un côté un profil en forme de crémaillère (12).

4. Agencement séquentiel d'organes de fixation selon l'une des revendications 1 à 3, **caractérisé en ce que** les carottes en forme de bandelettes (9) sont, au niveau de leurs deux extrémités, déportées suivant une disposition en gradins et ceci dans des conditions telles que les portions en gradins (14), au niveau d'une extrémité, se complètent avec les portions en gradins antagonistes (15) correspondantes de la portion de début qui suit pour constituer une section transversale de bandelette complète et peuvent être raccordées entre elles.

5. Procédé d'agencement d'organes de fixation selon une disposition séquentielle successive en vue de leur mise à disposition automatique pour le serrage de faisceaux selon l'une des revendications 1 à 4, **caractérisé en ce que** les organes de fixation sont, dans le moule, moulés par injection de part et d'autre de la collerette (8) au-dessus de deux carottes en forme de bandelettes (9) disposées parallèlement l'une par rapport à l'autre et **en ce que** les organes de fixation (1) restent, après l'ouverture des deux moitiés du moule, raccordées à celles-ci par l'intermédiaire de barrettes entretoises formant carottes à rupture par arrachement (11) et ceci dans des conditions telles que les carottes en forme de bandelettes (9) sont susceptibles d'être utilisées en tant que bandelettes d'alimentation pour la mise à disposition des organes de fixation lors de leur utilisation ultérieure.

6. Procédé selon la revendication 5, **caractérisé en ce que** les carottes en forme de bandelettes (9) sont, après le démoulage, replacées en arrière dans le moule au niveau de leurs gradins d'extrémité (14) et lors du moulage par injection du groupe d'organes de fixation (1) suivants, sont moulées par injection de manière imperdable avec les gradins de début (15) que comportent les carottes en forme de bandelettes (9) suivantes.

7. Procédé selon la revendication 6, **caractérisé en ce que** les gradins (14) respectivement moulés par injection au niveau de l'extrémité comportent des évidements ou des trous oblongs (16), qui sont remplis par la matière injectée correspondant aux gradins (15) suivants.
